# EUROPÄISCHE PATENTSCHRIFT

(11) **EP 0 742 250 B1**
(45) Veröffentlichungstag und Bekanntmachung des Hinweises auf die Patenterteilung: **29.10.2003**
(21) Anmeldenummer: 96106951.5
(22) Anmeldetag: 03.05.1996
(51) Int. Cl.: C08J 9/14

(54) **Verfahren zur Herstellung von Polyurethan-Weichschaumstoffen**
Process for the preparation of flexible polyurethane foams
Procédé de préparation de mousses souples de polyuréthane

(30) Priorität: 12.05.1995 DE 19517445; 03.11.1995 DE 19541013
(43) Veröffentlichungstag der Anmeldung: 13.11.1996
(73) Patentinhaber: Solvay Fluor und Derivate GmbH, 30173 Hannover (DE)
(72) Erfinder: Krücke, Werner, 30163 Hannover (DE)
(74) Vertreter: Gosmann, Martin, Dr.

(56) Entgegenhaltungen:
- GB-A- 2 273 936
- US-A- 5 194 325
- DATABASE WPI Week 9216 Derwent Publications Ltd., London, GB; AN 92-127814 XP002010990 & JP-A-04 070 425 (NIPPON TELEG. & TELEPH.)

## Beschreibung

Die Erfindung betrifft ein Verfahren zur Herstellung von Weichschaumstoffen auf Basis von Di- und Polyisocyanaten, insbesondere Polyurethanschaumstoffen, sowie dafür geeignete Treibmittel.

Ein bekanntes chemisches Treibmittel für PUR-Weichschaumstoff ist Kohlendioxid, das bei der Herstellung der Polyurethane aus Di- und Polyisocyanaten und Verbindungen mit reaktivem Wasserstoff in Gegenwart von Wasser erzeugt wird.

Es ist ebenfalls bekannt, sogenannte physikalische Treibmittel einzusetzen, nämlich leichtflüchtige organische Substanzen, z. B. aus der Gruppe der Ketone, z. B. Aceton, der Acetate, z. B. Methylacetat, Ethylacetat, der halogenhaltigen Alkane, z. B. Trichlorfluormethan (R11), Chlordifluormethan (R22), Dichlorfluorethan (R141b), und halogenhaltigen Ether (z. B. E245). Die physikalischen Treibmittel für Polyurethanschaumstoffe müssen bestimmte Anforderungen gerecht werden. So muß das Treibmittel im entstehenden Polyurethan unlöslich aber mit den Rohstoffen gut mischbar sein. Es soll weiterhin thermisch stabil und unbrennbar sein. Aus diesen Gründen wurden fluorierte Chlorkohlenwasserstoffe (FCKW) häufig als physikalische Treibmittel eingesetzt. Aus ökologischen Gründen ist deren Anwendung jedoch nicht mehr zu vertreten.

Die US 5,194,325 offenbart ein Verfahren zur Herstellung von Integralschaum unter Verwendung einer Treibmittelzusammensetzung. Als Treibmittel wird 1,1,1,2-Tetrafluorethan allein oder eine Mischung aus 1,1,1,2-Tetrafluorethan und einem Alkan verwendet.

JP 4 070 425 offenbart ein Verfahren zum Ausschäumen von Hohlräumen mit PU-Schaum hoher Dichte. Als Treibmittel wird eine Mischung aus 1,1,1,2-Tetrafluorethan und 1,1-Difluorethan verwendet

Die Aufgabe der Erfindung besteht darin, ein neues Verfahren zur Herstellung von Weichschaumstoffen zur Verfügung zu stellen, welches die bisherigen Nachteile des Standes der Technik überwindet.

Es wurde gefunden, daß 1,1,1,2-Tetrafluorethan in gleicher Weise wie FCKW zur Aufschäumung von Schaumstoffen auf Basis von Di- und Polyisocyanaten geeignet ist; seine geringere Löslichkeit in den Rohstoffen wird durch Zugabe von Lösevermittlern verbessert.

Gegenstand der Erfindung ist daher ein Verfahren zur Herstellung von PUR-Weichschaumstoffen mit einer Rohdichte unter 20 kg/m³ unter Verwendung einer Treibmittelzusammensetzung, die 1,1,1,2-Tetrafluorethan (R134a) und mindestens eine weitere Treibmittelkomponente aus der Gruppe umfassend 1,1-Difluorethan (R152a) und organische Verbindungen mit einem Siedepunkt <105 °C, vorzugsweise <80 °C enthält. Geeignet sind dafür auch Treibmittelzusammensetzungen, die 1,1,1,2-Tetrafluorethan, 1,1-Difluorethan sowie mindestens eine weitere organische Verbindung mit einem Siedepunkt <105 °C, vorzugsweise <80 °C enthalten.

Die organische Verbindung ist z. B. ein bekanntes physikalisches Treibmittel. Besonders bevorzugt liegt der Siedepunkt unterhalb 70 °C.

1,1-Difluorethan bzw. die organische Verbindung fungieren als Lösevermittler.

Weichschaumstoffe sind Schaumstoffe, die bei Druckbelastung einen relativ geringen Verformungswiderstand aufweisen. Bevorzugt bezeichnet der Begriff "Weichschaumstoffe" im Rahmen der vorliegenden Erfindung solche Schaumstoffe, deren Druck-Spannung bei 10 % Stauchung nach der deutschen Industrienorm DIN 53421 kleiner oder gleich 15 kPa beträgt. "PUR" bedeutet "Polyurethan".

Einsetzbar sind sowohl binäre als auch Treibmittelzusammensetzungen, die mehr als zwei Komponenten enthalten.

Bevorzugt werden binäre Treibmittelzusammensetzungen eingesetzt. Sehr gut geeignet sind binäre Mischungen von 1,1,1,2-Tetrafluorethan und 1,1-Difluorethan.

In einer bevorzugten Variante enthält die Treibmittelzusammensetzung 1,1,1,2-Tetrafluorethan in einer Menge von 50 bis 95 Gew.-Teilen und 5 bis 50 Gew.-Teile 1,1-Difluorethan, insbesondere 84 bis 88 Gew.-Teile 1,1,1,2-Tetrafluorethan und 12 bis 16 Gew.-Teile 1,1-Difluorethan.

Besonders bevorzugt werden Treibmittel eingesetzt, die aus den beiden genannten Komponenten in den angegebenen Mengen bestehen.

Ein aus 84 bis 88 Gew.-% 1,1,1,2-Tetrafluorethan und aus 12 bis 16 Gew.-% 1,1-Difluorethan bestehendes Treibmittelgemisch ist neu und ebenfalls Gegenstand der Erfindung.

Eine andere Variante der Erfindung betrifft die Herstellung von PUR-Weichschaumstoffen unter Verwendung binärer Treibmittelzusammensetzungen, die 1,1,1,2-Tetrafluorethan und bekannte flüssige physikalische Treibmittel, nämlich leichtflüchtige organische Verbindungen mit einern Siedepunkt <80 °C enthält. Sie sind vorzugsweise ausgewählt aus der Gruppe der Acetate, z. B. Essigsäuremethyl- oder Ethylester, cyclischen Kohlenwasserstoffe, halogenierten Kohlenwasserstoffe, Ether, halogenhaltigen Ether, stickstoffhaltigen Kohlenwasserstoffe.

Als leichtflüchtige organische Verbindung, die zusätzlich zu 1,1,1,2-Tetrafluorethan als Treibmittel eingesetzt werden, eignet sich besonders ein flüssiges oder unter Druck verflüssigtes Treibmittel aus der Gruppe der Ether mit insgesamt 2 bis 4 Kohlenstoffatomen, der halogenhaltigen Kohlenwasserstoffe mit 1 bis 5 Kohlenstoffatomen oder der halogenhaltigen Ether mit insgesamt 2 bis 6 Kohlenwasserstoffatomen.

Beispiele für cyclische Kohlenwasserstoffe sind Cyclopropan, Cyclopentan und Cyclohexan. Unter halogenhaltigen Kohlenwasserstoffen werden Wasserstoff enthaltende Fluorchlorkohlenwasserstoffe oder Fluorkohlenwasserstoffe oder Perfluorverbindungen z. B. Perfluoralkane verstanden. Als Fluorchlorkohlenwasserstoffe sind z. B. Chlordifluormethan (R22), 1,1-Dichlor-1-fluorethan (R141b), 1-Chlor-1,1-difluorethan (R142b) oder 1,3-Dichlor-1,1,2,3,3,hexafluorpropan (R216a) einsetzbar. Beispiele für Fluorkohlenwasserstoffe sind Pentafluorethan (R125), 1,1,1-Trifluorethan (R143a), 1,1,2-Trifluorethan (R143), 1,1-Difluorethan (R152a), 1,1,1,2,2-Pentafluorpropan (R245fa), Octafluorpropan (R218) oder 1,1,1,2,2-Pentafluorbutan (R365 mfc). Unter halogenhaltigen Ethern werden Wasserstoff enthaltende Fluorchlor- oder Fluorether, wie z. B. Difluor-methoxy-2,2,2-trifluorethan (E245) verstanden. Beispiele für einsetzbare Ether sind Dimethylether oder Diethylether. Bevorzugter stickstoffhaltiger Kohlenwasserstoff ist Nitromethan.

In einer bevorzugten Ausführungsform verwendet man eine Treibmittelzusammensetzung, die 50 bis 95 Gew.-Teile 1,1,1,2-Tetrafluorethan und 5 bis 50 Gew.-Teile mindestens eines der vorstehend genannten physikalischen Treibmittel enthält. Binäre Zusammensetzungen bestehen aus den genannten Komponenten in der angegebenen Zusammensetzung. Sehr gut geeignete Zusammensetzungen enthalten 50 bis 95 Gew.-Teile 1,1,1,2-Tetrafluorethan und 5 bis 50 Gew.-Teile 1,1-Difluorethan, 1,1,1,2,2-Pentafluorbutan, 1,1,1,3,3-Pentafluorbutan oder Difluormethoxy-2,2,2-trifluorethan, oder sie bestehen aus derartigen Gemischen.

Auch Treibmittelzusammensetzungen, die 1,1,1,2-Tetrafluorethan und mindestens zwei weitere physikalische Treibmittel enthalten, sind einsetzbar. 1,1,1,2-Tetrafluorethan ist mit 50 bis 95 Gew.-Teilen enthalten, die weiteren Treibmittel mit insgesamt 5 bis 50 Gewichtsteilen. Gut geeignet sind Treibmittelzusammensetzungen, die 50 bis 95 Gew.-Teile 1,1,1,2-Tetrafluorethan enthalten sowie insgesamt 5 bis 50 Gew.-Teile eines Gemisches von 1,1-Difluorethan und mindestens eines weiteren physikalischen Treibmittels, wobei das Gewichtsverhältnis von 1,1-Difluorethan zum weiteren physikalischen Treibmittel 1:10 bis 10:1 beträgt. Derartige letztgenannte Gemische, die aus R134a, R152a und einem weiteren physikalischen Treibmittel bestehen, sind neu und ebenfalls Gegenstand der Erfindung.

In der erfindungsgemäßen Zusammensetzung können neben den eigentlichen Treibmitteln noch weitere an sich übliche Hilfsstoffe wie z. B. Flammschutzmittel, Emulgatoren, Schaumstabilisatoren, Bindemittel usw. enthalten sein.

Das erfindungsgemäße Verfahren kann in Anwesenheit üblicher Flammschutzmittel in der Reaktionsmischung durchgeführt werden. Hierzu gehören beispielsweise reaktive Flammschutzmittel und besonders Flammschutzmittel auf Basis von organischen Phosphorverbindungen. Sehr gut geeignet sind Phosphatester und Phosphonester, die organische Gruppen, die auch durch ein oder mehrere Halogenatome substituiert sein können, aufweisen. Die organischen Gruppen können aliphatischen oder aromatischen Charakter aufweisen. Sehr gut geeignet sind Phosphatester und Phosphonatester, die durch drei C₁- C₆-Alkylgruppen, die ein oder zwei Halogenatome aufweisen können, substituiert sind, beispielsweise Trischlorisopropylphosphat, Trischlorethylphosphat, Trischlorpropylphosphat, Dimethylethylphosphat, Trisdichlorisopropylphosphat, Dimethylmethylphosphonat, vorzugsweise Trischlorpropylphosphat. Als Stabilisatoren sind beispielsweise Copolymere aus Siloxan geeignet.

Besonders geeignet ist die Verwendung auch der neuen Treibmittel für die Herstellung von Weichschäumen auf Basis von Di- oder Polyisocyanaten.

Wird das erfindungsgemäße Verfahren zur Herstellung weichgeschäumter PUR-Kunststoffe eingesetzt, so können hierbei alle üblichen Schaumrohstoffe wie z. B. aliphatische, cycloaliphatische oder aromatische Di- oder Polyisocyanate eingesetzt werden. Beispiele für Schaumrohstoffe sind z. B. 2,4- und 2,6-Toluylendiisocyanat, Diphenylmethandiisocyanat, Polymethylenpolyphenylisocyanat und Mischungen davon. Es können auch Carbodiimidgruppen, Urethangruppen, Allophanatgruppen, Isocyanuratgruppen, Harnstoffgruppen oder Biuretgruppen enthaltene Polyisocyanate, die man als modifizierte Polyisocyanate oder Isocyanatprepolymere bezeichnet, verwendet werden. Bei der Herstellung von weichgeschäumten PUR-Kunststoffen werden Polyisocyanate üblicherweise mit Verbindungen umgesetzt, die mindestens zwei gegenüber Isocyanatgruppen reaktionsfähige Wasserstoffatome enthalten, beispielsweise Hydroxylgruppen aufweisende Verbindungen auf Polyester-, Polyether- und Aminbasis, sowie Amino- und/oder Carboxyl- und/oder Tiolgruppen aufweisende Verbindungen. Weiterhin können alle bei der Herstellung von geschäumten PUR-Kunststoffen eingesetzten Katalysatoren wie z. B. tertiäre Amine und/oder organische Metallverbindungen wie beispielsweise Zinnsalze von Carbonsäuren eingesetzt werden. Ebenfalls geeignet sind organische Amine, Aminoalkohole oder Aminoether, z. B. 2-Dimethylaminoethyl-3-dimethylaminopropylether, Diethanolamin, Dimethylcyclohexylamin, 2-Dimethylaminoethylether, oder Morpholinverbindungen, wie z. B. 2,2-Dimorpholinodiethylether, N,N-Dimethylaminoethylmorpholin, N-Methylmorpholin. Bevorzugt sind die Morpholinverbindungen, insbesondere 2,2-Dimorpholinodiethylether.

Auf an sich bekannte Weise können dabei zusätzlich zu den Polymeren und/oder polymerisierbaren Bestandteilen alle an sich bekannten Zusatz- oder Hilfsstoffe, beispielsweise Nukleierungsmittel, Porenreglersubstanzen, Flammschutzmittel, Antistatika, Stabilisatoren, Weichmacher, Vernetzungsmittel, Füllstoffe oder Farbstoffe beigefügt sein.

Als Polyolkomponente können z. B. Glycerin, Glykole oder Polyetherpolyole, die als Additionsprodukte von Propylenoxid oder Ethylenoxid an mehlwertige Alkohole, Wasser oder Ethylendiamin erhalten wurden, oder Polyesterpolyole, die als Polykondensationsprodukte aus Polyolen mit Dicarbonsäuren oder deren Anhydriden erhalten wurden, oder Gemische derselben in der PUR-Schaummischung enthalten sein. Eine typische Polyolkomponente kann z. B. ein Gemisch aus einem Polyetherpolyol (beispielsweise Diol oder Triol) mit einer Hydroxylzahl von 15 bis 330 und höher und einem Polyetherpolyol (z. B. einem Diol) mit einer Hydroxylzahl von 32 sein. Weiterhin sind auch modifizierte Pflanzenöle mit einer OH-Zahl im Bereich von ca. 20 bis ca. 180, z. B. Ricinusöl, möglich.

Als Di- bzw. Polyisocyanatkomponente können z. B. Diphenylmethan-4,4'-diisocyanat, Toluylendiisocyanat, Diisocyanato-toluol, 1,5-Diisocyanato-naphthalin, Triisocyanato-triphenylmethan, 1,6-Diisocyanatohexan, vorzugsweise Diphenylmethan-4,4'-Diisocyanat, oder Gemische davon, eingesetzt werden.

Eine typische PUR-Schaummischung, die sich vorteilhaft mit Hilfe der erfindungsgemäßen Treibmittelzusammensetzung verschäumen läßt, besteht so beispielsweise aus ca. 53 Gew.-% einer Polyolkomponente, z. B. aus einem Gemisch eines Polyetherpolyols mit einer Hydroxylzahl von 32 bis 48 und einem Polyetherpolyol mit einer Hydroxylzahl von 56 im Mischungsverhältnis 2:1, ca. 36 Gew.-% einer Polyisocyanatkomponente, z. B. Toluylendiisocyanat, ca. 0,15 Gew.-% einer Katalysatorsubstanz wie z. B. Triethylendiamin, ca. 1,0 Gew.-% Silikonschaumstabilisator, ca. 2,4 Gew.-% Wasser, ca. 4,0 Gew.-% eines Flammschutzmittels, z. B. Trichlorpropylphosphat, ca. 3,7 Gew.-% der erfindungsgemäßen Treibmittetmischung.

Mit der erfindungsgemäßen Treibmittelzusammensetzung lassen sich insbesondere PUR-Weichschaumstoffe mit Rohdichten unter 20 kg/m³ insbesondere im Bereich von 14 bis 18 kg/m³ herstellen. Dieser Rohdichte Bereich ist bislang nur bei Verwendung von Trichlorfluormethan (R11) oder anderen bekannten Treibmitteln erzielbar. Weiterhin zeichnen sich die Schaumstoffe durch eine erhöhte Flexibilität, dem sogenannten Supersoft-Verhalten aus. Des weiteren ist die Gefahr des Scorching stark vermindert. Unter Scorching ist die Neigung des Schaumstoffes zum verfärben aufgrund erhöhter Temperaturbelastung während des Entstehens zu verstehen. Stoffe die zum verfärben neigen, sind z. B. für bestimmte Anwendungszwecke ungeeignet. Dieser Verfärbungseffekt tritt häufig bei der Herstellung von Schaumstoffen mit einer Rohdichte unter 20 kg/m³ auf, wenn Wasser als Treibmittel verwendet wurde.

Die nachfolgenden Beispiele sollen die Erfindung näher erläutern, ohne sie jedoch in ihrem Umfang zu begrenzen.

### Beispiele

### Beispiel 1: (Vergleichsbeispiel)

Zur Herstellung des PUR-Weichschaumstoffes wurde eine Mischung aus

| | |
|---|---|
| 70 Gew.-Teile | Polyetherpolyol OHZ 36 |
| 30 Gew.-Teile | Polyetherpolyol OHZ 95 |
| 5,3 Gew.-Teile | Wasser |
| 0,12 Gew.-Teile | Triethylendiamin, als 33 %-ige Lösung in Dipropylenglykol (Thancat) |
| 0,1 Gew.-Teile | Zinnoctoat |
| 1,9 Gew.-Teile | Schaumstabilisator BF 2370 der Firma T. H. Goldschmidt |
| 65,5 Gew.-Teile | Toluylendiisocyanat mit einem Isomeren-Gemisch der 2,2 bzw. 2,6 Toluylendiisocyanatverbindung von 80 % zu 20 % (TDI 80) |

mit 12 Gew.-Teilen Trifluormethan (R11) als Treibmittel verschäumt.

### Beispiel 2: (Vergleichsbeispiel)

Die gleiche Ausgangsmischung wie in Beispiel 1 wurde mit 10,5 Gew.-Teilen 1,1-Dichlor-1-fluorethan (R141b) als Treibmittel verschäumt.

### Beispiel 3:

Die Ausgangsmischung analog Beispiel 1 wurde mit 8,5 Gew.-Teilen eines Gemischs aus 1,1,1,2-Tetrafluorethan (R134a) und 1,1-Difluorethan (R152a) im Verhältnis 86 : 14 (Gew.-T.) als Treibmittel verschäumt

Die Ergebnisse sind in Tabelle 1 aufgeführt.

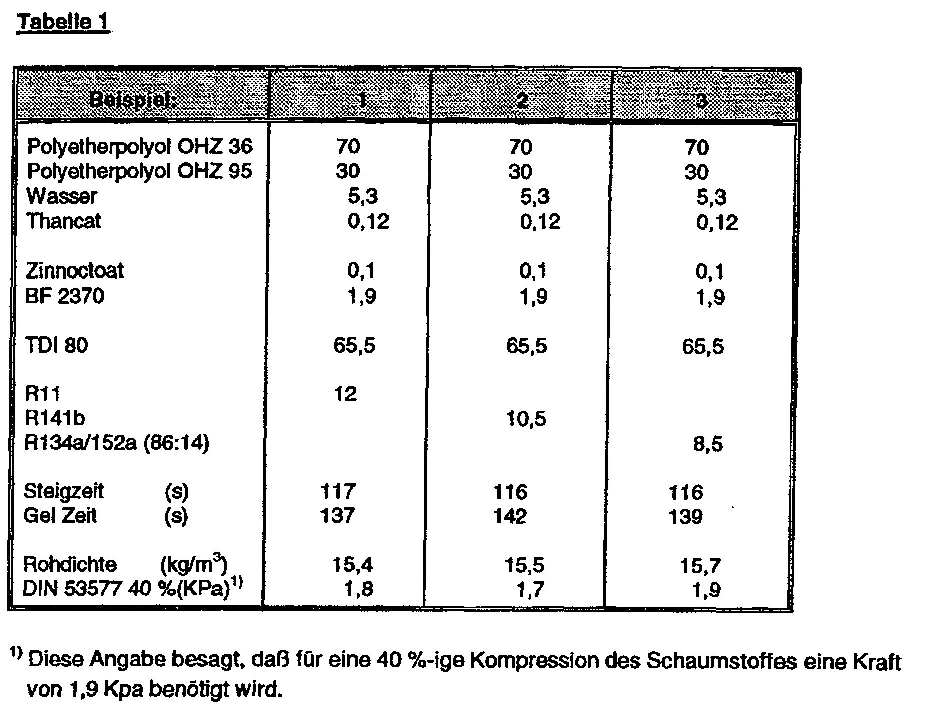

## Patentansprüche

1. Verfahren zur Herstellung von Weichschaumstoffen mit einer Rohdichte unter 20 kg/m³ auf Basis von Di- oder Polyisocyanaten durch Umsetzung von Di- oder Polyisocyanaten mit Verbindungen mit mindestens zwei gegenüber Isocyanatgruppen reaktionsfähigen Wasserstoffatomen, unter Verwendung eines Treibmittels und gegebenenfalls weiteren Zusatzmitteln, **dadurch gekennzeichnet, daß** ein Treibmittel eingesetzt wird, das 1,1,1,2-Tetrafluorethan und mindestens eine weitere Treibmittelkomponente aus der Gruppe umfassend 1,1-Difluor-ethan und leichtflüchtige organische Verbindungen mit einem Siedepunkt <105 °C, aus der Gruppe der Acetate, cyclischen Kohlenwasserstoffe, halogenierten Kohlenwasserstoffe oder stickstoffhaltigen Kohlenwasserstoffe enthält.

2. Verfahren zur Herstellung von Weichschaumstoffen nach Anspruch 1, **dadurch gekennzeichnet, daß** ein Treibmittel eingesetzt wird, das 50 bis 95 Gew.-Teile 1,1,1,2-Tetrafluorethan und 5 bis 50 Gew.-Teile der weiteren Treibmittelkomponente oder Treibmittelkomponenten enthält.

3. Verfahren zur Herstellung von Weichschaumstoffen nach Anspruch 1, **dadurch gekennzeichnet, daß** ein Treibmittel aus 50 bis 95 Gew.-Teilen 1,1,1,2-Tetrafluorethan und 5 bis 50 Gew.-Teilen eines Gemisches aus 1,1-Difluorethan und einer leichtflüchtigen organischen Verbindung mit einem Siedepunkt <80 °C als weitere Treibmittelkomponenten eingesetzt wird.

4. Verfahren nach Anspruch 1, **dadurch gekennzeichnet, daß** man ein Treibmittel einsetzt, das aus 84 bis 88 Gew.-% 1,1,1,2-Tetrafluorethan und 12 bis 16 Gew.-% 1,1-Difluorethan besteht.

## Claims

1. A process for the preparation of flexible foams having a density of less than 20 kg/m³ based on diisocyanates or polyisocyanates by reaction of diisocyanates or polyisocyanates with compounds having at least two hydrogen atoms which are reactive with respect to isocyanate groups, using a blowing agent and optionally further additives, **characterised in that** a blowing agent is used which contains 1,1,1,2-tetrafluoroethane and at least one further blowing-agent component from the group comprising 1,1-difluoroethane and readily volatile organic compounds having a boiling point of < 105°C from the group comprising acetates, cyclic hydrocarbons, halogenated hydrocarbons or nitrogen-containing hydrocarbons.

2. A process for the preparation of flexible foams according to Claim 1, **characterised in that** a blowing agent is used which contains 50 to 95 parts by weight 1,1,1,2-tetrafluoroethane and 5 to 50 parts by weight of the further blowing-agent component or blowing-agent components.

3. A process for the preparation of flexible foams according to Claim 1, **characterised in that** a blowing agent consisting of 50 to 95 parts by weight 1,1,1,2-tetrafluoroethane and 5 to 50 parts by weight of a mixture of 1,1-difluoroethane and a readily volatile organic compound having a boiling point of < 80°C are used as further blowing-agent components.

4. A process according to Claim 1, **characterised in that** a blowing agent is used which consists of 84 to 88% by weight 1,1,1,2-tetrafluoroethane and 12 to 16% by weight 1,1-difluoroethane.

## Revendications

1. Procédé de fabrication de mousses souples d'une masse volumique apparente inférieure à 20 kg/m³ à base de di- ou de polyisocyanates par mise en oeuvre de di- ou polyisocyanates avec des composés comportant au moins deux atomes d'hydrogène capables de réagir face aux groupes isocyanates, en utilisant un agent gonflant et, le cas échéant, d'autres additifs, **caractérisé en ce que** l'on utilise un agent gonflant qui contient du 1,1,1,2-tétrafluoroéthane et au moins un autre composant d'agent gonflant du groupe englobant le 1,1-difluoroéthane et des composés organiques très volatils d'un point d'ébullition < 105°C, du groupe des acétates, des hydrocarbures cycliques, des hydrocarbures halogénés ou des hydrocarbures azotés.

2. Procédé de fabrication de mousses souples selon la revendication 1, **caractérisé en ce que** l'on utilise un agent gonflant qui contient 50 à 95 parties en poids de 1,1,1,2-tétrafluoroéthane et 5 à 50 parties en poids de l'autre composant d'agent gonflant ou des autres composants d'agent gonflant.

3. Procédé de fabrication de mousses souples selon la revendication 1, **caractérisé en ce que** l'on utilise un agent gonflant qui contient 50 à 95 parties en poids de 1,1,1,2-tétrafluoroéthane et 5 à 50 parties en poids d'un mélange constitué de 1,1-difluoroéthane et d'un composé organique très volatil d'un point d'ébullition < 80°C comme autres composants d'agent gonflant.

4. Procédé de fabrication selon la revendication 1, **caractérisé en ce que** l'on utilise un agent gonflant constitué de 84 à 88 % en poids de 1,1,1,2-tétrafluoroéthane et de 12 à 16 % en poids de 1,1-difluoroéthane.
